# EUROPEAN PATENT SPECIFICATION

(11) **EP 2 999 356 B1**
(45) Date of publication and mention of the grant of the patent: **18.07.2018**
(21) Application number: 14721348.2
(22) Date of filing: 30.04.2014
(51) Int. Cl.: A23L 29/212, A23L 27/00, A23L 27/40, A23L 23/00

(54) **METHODS FOR INHOMOGENEOUS SODIUM DISTRIBUTION**
VERFAHREN ZUR INHOMOGENEN NATRIUMVERTEILUNG
PROCÉDÉS POUR DISTRIBUER DU SODIUM DE MANIÈRE NON HOMOGÈNE

(30) Priority: 10.05.2013 US 201361822021 P
(43) Date of publication of application: 30.03.2016
(73) Proprietor: Nestec S.A., 1800 Vevey (CH)
(72) Inventor: WOO, Kyungsoo, Broadview Heights, OH 44147 (US)
(74) Representative: Mollet, Beat Max
(86) International application number: PCT/EP2014/058861
(87) International publication number: WO 2014/180732

(56) References cited:
- WO-A1-2011/076528
- WO-A1-2012/093929
- WO-A1-2013/064449

## Description

### BACKGROUND

The present disclosure relates generally to methods for reducing sodium levels without impacting taste. More specifically, the present disclosure is directed to food compositions and methods for making and using same that provide enhanced saltiness perception by positioning most of the sodium in an aqueous phase relative to a starch polymer phase.

Sodium intake by consumers has been steadily increasing up to a point much higher than recommended by health authorities. The high intake of sodium has often been related to high blood pressure, which leads to many cardiovascular diseases, and also has been related to renal disease, stomach cancer, bone demineralization, and other conditions.

Considerable efforts have been made to reduce sodium in processed foods. Existing approaches for reducing sodium include controlling the total level of salt, using salt substitutes, and/or using flavor enhancers. However, reducing sodium has been a challenge because these existing approaches affect not only saltiness, but also flavor and texture. For example, reducing sodium in foods usually negatively impacts taste because sodium provides basic flavor by itself and also enhances other flavors present in the food. Typical quality deteriorations related with the existing sodium reduction approaches are insufficient saltiness, off flavor and taste, and inferior texture. Of course, flavor and texture are extremely important factors in the decision whether to consume nutritious foods or not and the consumer enjoyment of nutritious foods.

The existing approaches do not consider the mobility and positioning of sodium in an aqueous food system containing sodium. Controlling the mobility of sodium by transforming the food polymer has been rarely considered, if ever. WO 2012/093929 discloses reduced sodium compositions for enhancing the flavor of food.

### SUMMARY

The present invention provides methods for reducing sodium levels without impacting taste, as described in the claims. Also disclosed herein is a food thickener system comprising starch and sodium chloride and methods for making and using same. Further disclosed are sauces and other food compositions comprising such a thickener system. The sauces and other food compositions obtained by the embodiments of the present disclosure provide excellent organoleptic properties, in particular enhanced saltiness perception while maintaining good taste and texture.

The sodium chloride is added to the composition after a food polymer transition, and the food polymer has reduced affinity for sodium chloride after the transition. As a result, the sodium chloride is more in the aqueous phase of the composition rather than in the polymer phase. Distribution of the sodium chloride more in the aqueous phase causes the sodium chloride to be more available for saltiness perception when the composition is consumed relative to compositions in which the sodium chloride is mainly in the polymer phase.

In an embodiment, positively charged non-sodium metal ions, such as potassium chloride, are added before the food polymer transition. The positively charged metal ions can be entrapped by the food polymer to decrease the sodium affinity of the food polymer and also mask the off taste associated with high levels of positively charged metal ions.

According to the invention, a method of producing a food composition is provided. The method includes the steps of: cooling gelatinized starch to form an insoluble starch gel; and adding sodium chloride to at least one of the gelatinized starch or the insoluble starch gel to form the food composition.

This method further includes cooking starch to form the gelatinized starch; and adding positively charged non-sodium metal ions at a time selected from the group consisting of before the cooking, during the cooking, and a combination thereof. In a related embodiment, at least a portion of the sodium chloride is added after the cooking.

In an embodiment, at least a portion of the sodium chloride is added during the cooling while the insoluble starch gel is forming.

In an embodiment, at least a portion of the sodium chloride is added after the cooling when the insoluble starch gel has been completely formed.

In an embodiment, the sodium chloride is added to the gelatinized starch with a sodium distribution enhancer selected from the group consisting of an acidifying component, an alkalinizing component, a gum component, a sugar and combinations thereof.

According to an embodiment of the present disclosure, a food composition comprising a starch and sodium chloride is provided. The starch is at least partially in a form of an insoluble starch gel, and a portion of the sodium chloride entrapped by or bound to the insoluble starch gel is less than a portion of the sodium chloride not entrapped by or bound to the insoluble starch gel.

In an embodiment, the food composition is selected from the group consisting of a water-based sauce, a dairy-based sauce, a tomato-based sauce, and combinations thereof.

In an embodiment, the starch comprises native starch.

In an embodiment, the starch comprises at least one of chemically modified starch or physically modified starch.

In an embodiment, the food composition further comprises positively charged metal ions in a position selected from the group consisting of entrapped by the insoluble starch gel, bound to the insoluble starch gel, and a combination thereof.

In a further embodiment of the present disclosure, a method for reducing sodium in a food product is provided. The method includes cooling gelatinized starch to form an insoluble starch gel; and adding sodium chloride to at least one of the gelatinized starch or the insoluble starch gel to form the food composition, the food product comprising 0.30 wt% to 2.50 wt% of sodium chloride.

In an embodiment, the insoluble starch gel at least partially blocks migration of the sodium chloride into the starch.

In yet another embodiment of the present disclosure, a method for increasing potassium in a food product is provided. The method includes cooking starch in the presence of 0.25 wt% to 3.2 wt% of potassium chloride to form gelatinized starch; cooling the gelatinized starch to form an insoluble starch gel; and adding sodium chloride to at least one of the gelatinized starch or the insoluble starch gel to form the food product, the food product comprising 0.30 wt% to 3.50 wt% of sodium chloride.

In an embodiment, the insoluble starch gel at least partially blocks migration of the potassium chloride from the starch.

An advantage of the present disclosure is to reduce the sodium in food compositions without compromising organoleptic properties such as flavor and texture.

Another advantage of the present disclosure is to provide food compositions having reduced sodium and good organoleptic properties without reformulating the food compositions with costly ingredients.

Still another advantage of the present disclosure is to reduce the total amount of sodium while maintaining flavor and texture without relying on and/or using salt substitutes or a flavor enhancer.

Yet another advantage of the present disclosure is to achieve a reduction in sodium of up to 70% relative to typical compositions while maintaining a similar or higher perception of saltiness.

Another advantage of the present disclosure is to improve salt perception by increasing positioning of sodium chloride in the aqueous phase of the food composition.

Still another advantage of the present disclosure is formation of a food polymer that resists migration of sodium chloride into the food polymer.

Another advantage of the present disclosure is formation of a food polymer that entraps or binds potassium chloride.

Yet another advantage of the present disclosure is increased levels of potassium without the bitter off taste associated with such potassium levels.

Still another advantage of the present disclosure is use of sugar to at least partially prevent migration of sodium chloride from the aqueous phase of the composition into the food polymer phase of the composition.

Another advantage of the present disclosure is use of an acid to at least partially prevent migration of sodium chloride from the aqueous phase of the composition into the food polymer phase of the composition.

Yet another advantage of the present disclosure is use of a gum to at least partially prevent migration of sodium chloride from the aqueous phase of the composition into the food polymer phase of the composition.

Additional features and advantages are described herein, and will be apparent from the following Detailed Description and the figures.

### BRIEF DESCRIPTION OF THE FIGURES

FIG. 1 shows drawings that compare sodium bound and entrapped by polymerized starch during cooling and storage in prior art methods (left panel) to inhomogeneous sodium distribution in which sodium is mainly not bound or entrapped by polymerized starch in embodiments of the present disclosure (right panel).
FIG. 2 shows a flowchart of a method for achieving improved saltiness perception by inhomogeneous salt distribution in an embodiment provided by the present disclosure.
FIG. 3 shows a flowchart of the method used to prepare samples for testing as discussed in the Examples.
FIG. 4 shows a bar graph of sensory evaluation results for tested samples.
FIG. 5 shows a bar graph of the amount of sodium chloride positioned in the aqueous phase in tested samples.
FIG. 6 shows a bar graph of flavor profiles in compositions prepared under varied cooking conditions.

### DETAILED DESCRIPTION

All percentages expressed herein are by weight of the total weight of the composition unless expressed otherwise. When reference is made to the pH, values correspond to pH measured at 25 °C with standard equipment. As used in this disclosure and the appended claims, the singular forms "a," "an" and "the" include plural referents unless the context clearly dictates otherwise. As used herein, "about" is understood to refer to numbers in a range of numerals. Moreover, all numerical ranges herein should be understood to include all integer, whole or fractions, within the range. The food composition disclosed herein may lack any element that is not specifically disclosed herein. Thus, "comprising," as used herein, includes "consisting essentially of' and "consisting of."

The present disclosure is related to food compositions having inhomogeneous sodium distribution. As used herein, "inhomogeneous sodium distribution" means that more of the sodium is located in the aqueous phase of the food composition relative to the polymer phase that comprises starch. For example, in an embodiment, the sodium entrapped by or bound to the starch is a smaller amount than the sodium that is not entrapped by or bound to the starch. It is important to note, however, that under typical conditions the food composition does not have distinct visible aqueous and polymer phases; the aqueous phase discussed herein is obtained by separating it from the polymer phase by centrifugation. The starch can provide thickness to the food composition and, as discussed in more detail hereafter, form a gel that resists migration of sodium chloride into the starch.

The inventors discovered that a food polymer transition results in a reduced affinity for sodium, and adding sodium chloride after the food polymer transition distributes sodium chloride more in the aqueous phase rather than in the polymer phase. Without being bound by theory, the inventors believe that distribution of the sodium chloride more in the aqueous phase results in higher levels of available sodium for saltiness perception when the food product is consumed. This effect enables a reduction in the sodium content of the food product without impacting the taste.

For example, raw starch under standard conditions is a granule. Starch swells and gelatinizes when cooked in water at a temperature of 55 to 80 °C such that the amylose in the starch is released from the granules and the amylopectin becomes less crystalline. If sodium chloride is present when the cooked starch is cooled, the starch becomes a gel that entraps the sodium chloride in a cross-linked biopolymer matrix that also binds the sodium chloride.

According to embodiments provided by the present disclosure, sodium chloride is added to pregelatinized starch or cooked starch after the starch has been cooled. The gelatinized starch re-associates to form a gel after cooling and resists migration of sodium chloride into the starch biopolymer matrix. In contrast, as noted above, prior art methods in which the sodium chloride is present during the cooking or the initial cooling result in sodium entrapment within the starch biopolymer matrix.

Suitable starches for food compositions according to the present disclosure include native starches, starch esters, starch ethers, and modified starches, such as physically modified and/or chemically modified starch, and combinations thereof. Starch sources can include wheat, barley, rye, rice, tapioca, potato and corn, for example. Pregelatinized starch is an example of physically modified starch.

In a preferred embodiment, the food composition is a sauce or comprises a sauce. Non-limiting examples of suitable sauces include water-based, dairy-based and tomato-based sauces. Further non-limiting examples of suitable sauces include macaroni and cheese sauce, steak sauce, pizza sauce, alfredo sauce, sweet and sour sauce, gravy, a dip, and a filling. An additional non-limiting example of the food composition is mashed potatoes. Nevertheless, the food composition is not limited to a specific embodiment.

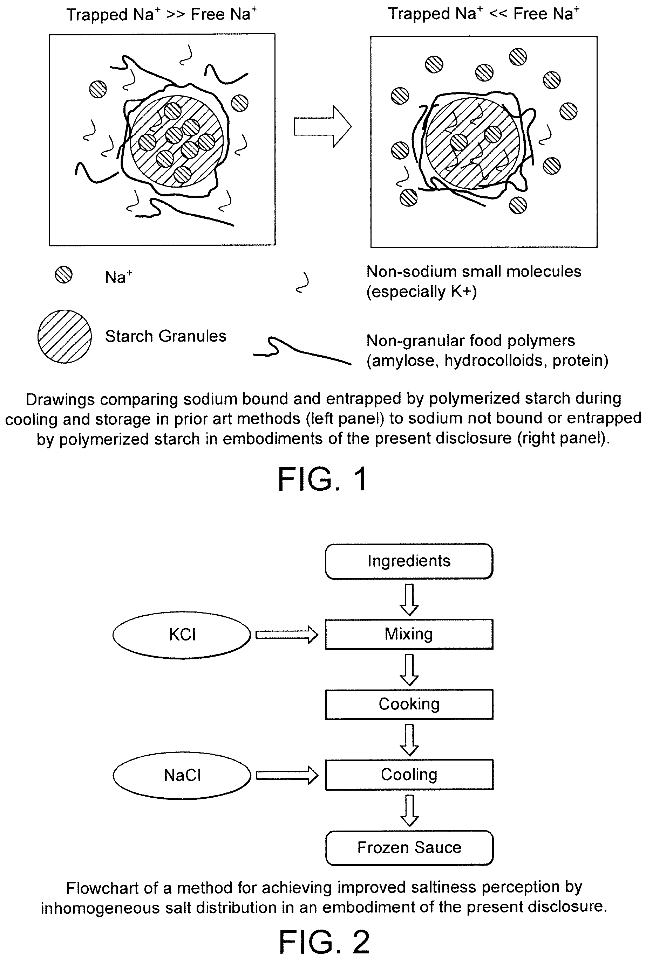

As generally illustrated in Fig. 2, the food composition may be prepared by mixing the starch with water and then cooking the mixture. For example, the mixture of starch and water may be cooked at a temperature from 80 to 120 °C for a time period from 10 to 20 minutes. Temperatures at the high end of this range can be used with pressurized cooking. Shorter cooking times, such as several minutes, can be used in steam-injection cooking. Longer cooking times, such as over 20 minutes, can be used with some cooking instruments. The cooking is not limited to specific temperatures or specific time periods, and the cooking can be any cooking that forms gelatinized starch.

Optionally, other components of the food composition can be included in the mixing and cooking stages in addition to the starch and the water. In a preferred embodiment, the food composition is cooked in the absence of additional sodium other than any already present in the starch. In an embodiment, the starch may be and/or may comprise pregelatinized starch. In such an embodiment, the cooking step can be omitted.

In an embodiment, the food composition is cooked in the presence of positively charged metal ions. For example, the positively charged metal ions can be added to the mixture of starch and water before and/or during the cooking. In embodiments in which the cooking is omitted and pregelatinized starch is used, the positively charged metal ions may be added to the pregelatinized starch. For example, the positively charged metal ions can be added to the mixture of pregelatinized starch before cooling. In some embodiments, the food composition does not comprise positively charged metal ions.

Non-limiting examples of suitable positively charged non-sodium metal ions include potassium salts, magnesium salts and calcium salts. For example, the gelatinized starch can comprise 0.25 wt% to 3.2 wt% of potassium chloride, preferably 0.25 wt% to 0.88 wt% of potassium chloride, and more preferably about 0.75 wt% of potassium chloride, based on the total weight of the food composition. The gelatinized starch can comprise from 20 to 200 wt% of potassium chloride, preferably from 20 to 150% of potassium chloride, even more preferably from 30 to 80 wt% of potassium chloride, and most preferably about 40 to 60 wt% of potassium chloride, based on the final total amount of sodium chloride in the food composition. The potassium may be provided at least partially by sources other than potassium chloride, such as other potassium salts and/or ingredients rich in potassium like milk mineral concentrate, for example. The potassium chloride can provide nutritional benefits, can contribute to the texture of the food composition, and can decrease the sodium affinity of the cooked starch and hydrocolloids and proteins that form a gelled structure with the cooked starch.

The gelatinized starch, such as the pregelatinized starch or the cooked mixture of starch and water is cooled to allow the components of starch, namely amylose and amylopectin, to re-associate and form an insoluble gel comprising a biopolymer matrix. For example, the gelatinized starch can be cooled to a temperature from 4 to 50 °C, for up to twenty-four hours, preferably up to one hour, more preferably up to thirty minutes, and most preferably even shorter time periods. In an embodiment in which potassium chloride is present during the cooking or otherwise added to the gelatinized starch, the potassium chloride can be at least partially entrapped and/or bound by the insoluble starch gel comprising a biopolymer matrix.

Although Fig. 2 shows the cooling as one step, the cooling can involve any number of steps and any number of temperatures. For example, the cooling can comprise a first cooling step at a first temperature and a second cooling step at a second temperature lower than the first temperature. A non-limiting example of such an embodiment is a cooling comprising a first cooling step for thirty minutes to one hour at 50 °C and a second cooling step for thirty minutes to one hour at 4 °C. However, the cooling step is not limited to a specific embodiment, and the cooling can be any decrease in temperature over a predetermined time period such that the starch forms an insoluble gel comprising a biopolymer matrix.

After the insoluble starch gel is formed, sodium chloride is added to the insoluble starch gel to produce an inhomogeneous sodium distribution in the food composition. For example, a sodium chloride solution can be added to the insoluble starch gel. According to the present invention, 0.30 wt% to 3.50 wt% of sodium chloride, preferably 0.30 wt% to 2.50 wt% of sodium chloride, and more preferably about 1.25 wt% of sodium chloride, based on the total weight of the food composition, is added to the insoluble starch gel. The sodium chloride can be at least partially added or even completely added after the insoluble starch gel is formed from the gelatinized starch gel, such as after cooling is completed.

In some embodiments, the sodium chloride can be added to the gelatinized starch before and/or during cooling. For example, in embodiments where the gelatinized starch is formed by cooking starch, the sodium chloride can be at least partially added or even completely added when the cooking is completed. As another example, in embodiments where pregelatinized starch is used, the sodium chloride can be at least partially added or even completely added before cooling the pregelatinized starch. As yet another example, the sodium chloride can be at least partially added or even completely added during cooling the gelatinized starch.

Optionally, other components of the food composition can added with the sodium chloride. For example, an acidifying component and/or an alkalinizing component can be added with the sodium chloride to the gelatinized starch and/or the insoluble starch gel. For example, the sodium chloride can be added with lactic acid, acetic acid and/or other fruit derived acids such as citric acid, malic acid and the like. The acidifying component and/or the alkalinizing component can decrease the mobility of the sodium chloride to enhance the distribution of the sodium chloride in the aqueous phase.

As another example, a gum component can be added with the sodium chloride. Without wishing to be bound by theory, the gum component can play a role as a diffusion barrier for sodium chloride. The absence of a gum component can play a role in enhancing diffusion of sodium chloride. Non-limiting examples of suitable gum components are konjac gum, xanthan gum, guar gum, locust bean gum, tara bean gum, gum tragacanth, arabic gum, karaya gum, gum ghatti, gellan gum, and combinations thereof. For example, the sodium chloride can be added with xanthan gum to the gelatinized starch and/or the insoluble starch gel. The gum component can enhance the gel formation of the starch polymer to solidify the starch-driven gel formation and at least partially prevent migration of the sodium chloride into the polymer phase.

As yet another example, sugar can be added with the sodium chloride to the gelatinized starch and/or the insoluble starch gel. The sugar can block spaces in the re-formed starch granules and at least partially prevent migration of the sodium chloride into the polymer phase.

In an embodiment, the starch can be or can be comprised by pastry flour. As known to the skilled artisan, pastry flour comprises gluten and native starch. In wheat flour, gluten may act as a naturally-existing barrier for sodium migration. Modified starch is used to improve freeze-thaw stability in frozen meal products. Therefore, using pastry flour, starch or a combination thereof may at least partially prevent migration of the sodium chloride into the polymer phase by enhancing gelation of the starch.

After adding sodium chloride and any other additional components to the insoluble starch gel, the resultant food composition can be stored. For example, the food composition can be stored at 4 °C for up to twenty-four hours, preferably up to one hour, even more preferably up to thirty minutes, and most preferably up to ten minutes.

The food composition can be combined with one or more other ingredients. For example, if the food product is a sauce, the sauce can be added to meat, fish, pasta, vegetables, fruits, grains such as rice, or the like. Non-limiting examples of products that can be formed using the food composition are macaroni and cheese; fettuccini alfredo; mashed potatoes; potatoes au gratin; a food product at least partially covered in cheese sauce; and the like. The food composition can be a foundation for a culinary product such as a soup, a gravy, a spread or a condiment. The food composition is not limited to a specific embodiment, and the food composition can be any food product comprising starch and having an inhomogeneous sodium distribution.

The resultant food composition can be chilled, frozen or otherwise preserved for later reheating and consumption by the consumer. For example, the food composition can be positioned in a container, such as a microwaveable tray, and then chilled and/or frozen. In an embodiment, the food composition can be stable for up to eighteen months under freezing conditions. After purchase, the consumer can then heat the food composition for consumption individually or with other food products and at a temperature of the food composition that is above room temperature. The food product can maintain its organoleptic properties during and after re-heating.

The food composition can comprise additional ingredients relative to the starch. For example, the food composition can comprise fat, milk solids non-fat, stabilizers, emulsifiers, spices, seasonings, proteins, or any combination thereof. Non-limiting examples of suitable fats include high oleic sunflower oil and high oleic safflower oil. The essential fatty acids linoleic and α-linolenic acid may also be added as may small amounts of oils containing high quantities of preformed arachidonic acid and docosahexaenoic acid such as fish oils or microbial oils.

The food composition can comprise proteins in addition to any protein provided by the starch. Non-limiting examples of suitable proteins include dairy-based proteins, plant-based proteins, animal-based proteins and artificial proteins. Dairy-based proteins include, for example, casein, caseinates (e.g., all forms including sodium, calcium, potassium caseinates), casein hydrolysates, whey (e.g., all forms including concentrate, isolate, demineralized), whey hydrolysates, milk protein concentrate, and milk protein isolate. Plant-based proteins include, for example, soy protein (e.g., all forms including concentrate and isolate), pea protein (e.g., all forms including concentrate and isolate), canola protein (e.g., all forms including concentrate and isolate), other plant proteins that commercially are wheat and fractionated wheat proteins, corn and corn fractions including zein, rice, oat, potato, peanut, green pea powder, green bean powder, and any proteins derived from beans, lentils, and pulses.

Non-limiting examples of suitable emulsifiers include monodiglycerides, diglycerides, polysorbates, sucrose esters of fatty acids, sucroglycerides, egg yolk, lecithin, propylene glycol esters of fatty acids, sorbitans, polyglycerol ester of fatty acids, lactylates and any combinations thereof. In an embodiment, the food composition does not include an emulsifier.

### EXAMPLES

The following non-limiting examples present scientific data developing and supporting the concept of the inhomogeneous salt distribution favoring the aqueous phase of a food composition.

### Texture System Preparation

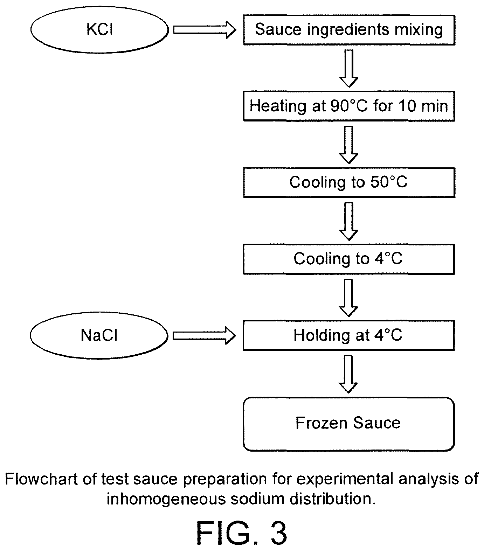

A texture system containing only starch, salts and water was prepared and tested. As generally illustrated in Fig. 3, a control sample was made by cooking 4 g of starch with 2 g of sodium chloride in 100 ml of water at 80 °C for 10 min. The cooked starch and water mixture was cooled to room temperature and stored at 4°C for one day to allow the components of starch, i.e. amylose and amylopectin, to re-associate and form an insoluble starch gel. The mixture was stored one more day at the same conditions after adding 100 ml of water, and then the control sample was compared with a test sample.

The test sample was prepared by cooking starch in water at the same conditions as the control sample but without sodium chloride. After storing the test sample one day at 4°C, 100 ml of sodium chloride solution (2%, w/v) was added to the cooked mixture. The test sample was stored one more day in a refrigerator.

The impact of a positively charged, non-sodium metal ion on sodium distribution was tested using potassium chloride. Model texture systems were prepared by adding varied amounts of potassium chloride (0.5 g and 1.0 g) before cooking in the procedure for the test sample preparation. The clear top layer of the cooked mixture was collected and analyzed for sodium by ICP emission spectrometry (ICP S12) using the official method of analysis of AOAC International, 18th ed., Method 984.27 and 985.01, AOAC International, Gaithersburg, MD, USA. 2005.

### Sauce preparation

A model sauce (Table 1)was prepared and tested for comparison with the findings obtained from the texture system. The model sauce was tested in bench-top scale using a Brabender® viscometer. For the control sauce (Ref. No. 1), all the ingredients were mixed, cooked together at 91°C for 10 min and cooled to room temperature using a Brabender viscometer. To all test samples (Ref. Nos. 2-4), the same cooking procedure was applied but sodium chloride was added to the cooked mixture after 10 minutes of holding at room temperature. Investigation on the competitive interaction of positively charged, non-sodium salt on the distribution of sodium in sauce was done by adding varied level of potassium chloride (0.25, 0.50, and 0.75 %, w/w, which is equivalent to 20, 40, and 60% based on sodium chloride) to the test formulation before cooking. The same level of sodium chloride (1.25% w/w) was used throughout the testing.

**Table 1. Model sauce formulation**

| | Control | | Sodium chloride added at the end of the processing | | | | | |
|---|---|---|---|---|---|---|---|---|
| Ref. No. | 1 | | 2 | | 3 | | 4 | |
| Composition | g | % | g | % | g | % | g | % |
| Dairy blend | 453.0 | 90.61 | 453.0 | 90.61 | 453.0 | 90.61 | 453.0 | 90.61 |
| Margarine | 21.7 | 4.34 | 21.7 | 4.34 | 21.7 | 4.34 | 21.7 | 4.34 |
| Corn starch | 17.5 | 3.50 | 17.5 | 3.50 | 17.5 | 3.50 | 17.5 | 3.50 |
| Xanthan gum | 0.28 | 0.06 | 0.28 | 0.06 | 0.28 | 0.06 | 0.28 | 0.06 |
| NaCl | 6.25 | 1.25 | 6.25 | 1.25 | 6.25 | 1.25 | 6.25 | 1.25 |
| Total | 500 | 100 | 500 | 100 | 500 | 100 | 500 | 100 |
| KCl¹ | 0 | 0 | 1.25 | 0.25 | 2.5 | 0.5 | 3.75 | 0.75 |

### Preparation of model sauce in scaled-up testing

Scaled-up testing with 6 kg of sauce was performed using a 5 gallon steam-jacketed kettle. Test samples were made by adding sodium chloride to cooked sauces after storing 1 hour and 24 hours at 4 °C to compare the impact of starch retrogradation on sodium redistribution. The holding time of 24 hours was chosen to provide a possible barrier for sodium added at the end, with such a barrier provided by enhanced retrogradation of the starch. The holding time of 1 hour was based on practical needs in processing plants for continuous production without micro-contamination.

To evaluate the impact of positively charged, non-sodium ions on sodium redistribution, varied levels of potassium chloride were added up to 120% (based on sodium chloride) before cooking. A summary of the tested conditions is shown in Table 2.

**Table 2. Composition of model sauce prepared in pilot scale testing for inhomogeneous sodium distribution**

| Sample description | NaCl %, w/w (%, in sauce) | KCl %, w/w (%, based on NaCl) |
|---|---|---|
| Reference sauce | | |
| Control | 1.25¹ | 0.21 (17%) |
| Negative control | 0.73² | 0.21 (60%) |
| Sauces for sodium redistribution (NaCl added at the end) | | |
| KCl at current level | | |
| Cold storage 1h | 1.25 | 0.21 (17%) |
| Cold storage 24h | 1.25 | 0.21 (17%) |

| KCl at increased level | | |
|---|---|---|
| Cold storage 1h | 1.25 | 0.88 (70%) |
| Cold storage 24h | 1.25 | 0.88 (70%) |
| KCl at increased level with sodium reduction | | |
| Cold storage 1h | 0.73 | 0.88 (120%) |
| Cold storage 24h | 0.73 | 0.88 (120%) |

### Sauce preparation with viscometer

Sauce manufacturing variables were evaluated using a Brabender® viscometer, which provides precise control on cooking temperature and time for the sauce with reproducibility. The viscometer was programmed as follows: 1) heat sauce from 30 to 90 °C in 20 minutes; 2) hold at 90 °C for 10 minutes; and 3) cool to 50 °C in 20 minutes. Test samples were prepared by adding sodium chloride to the cooked sauces after 1 hour of storage at 4 °C (Fig. 3). The tested variables were selected based on potentials affecting gel formation during sauce cooking. Model sauce compositions and tested variables are summarized in Tables 3 and 4.

**Table 3. Model sauce formulation used as a reference**

| Ingredients for sauce | Composition (%, w/w) |
|---|---|
| Dairy Blend | 87.14 |
| Margarine | 4.23 |
| Modified corn starch | 4.69 |
| Xanthan gum | 0.057 |
| Sodium chloride | 3.49 |
| Sugar | 0.38 |
| KCl | 0 |
| Lactic acid | 0.01 |

**Table 4. Varied processing conditions prepared by Brabender® viscometer for the evaluation of inhomogeneous salt distribution**

| Ref. No. | Processing variables tested |
|---|---|
| *Reference sauces* | |
| Control | Prototype sauce. No KCl added. |
| SR36 | Sodium reduction at 36%. No KCl added. |
| *Test Sauces (Sodium reduced at* 36% *and added at the end of the process)* | |
| SR36-Nae | Sodium reduced 36% and added at the end. |
| SR36-K150-Nae | KCl 150% (based on NaCl) added before cooking. |
| SR36-K150-NXae | KCl 150% (based on NaCl) added before cooking. Xanthan and NaCl added at the end. |
| SR36-K150-NSae | KCl 150% (based on NaCl) added before cooking. Sugar and NaCl added at the end. |
| SR36-K150-NLae | KCl 150% (based on NaCl) added before cooking. Lactic acid and NaCl added at the end. |
| SR36-K150-PF-Nae | KCl 150% (based on NaCl) added before cooking. Corn starch replaced with pastry flour. |
| SR36-K150-95-Nae | KCl 150% (based on NaCl) added before cooking. Cooked at increased temperature (95 °C). |
| SR36-K150-85-Nae | KCl 150% (based on NaCl) added before cooking. Cooked at decreased temperature (85 °C). |

### Measurement of sodium in "aqueous phase" of sauce

A protocol for the measurement of sodium in "aqueous phase" of the sauce system was determined after a series of preliminary tests. After frozen storage, 20 g of sauce samples were thawed and mixed with the same amount of water. The top water was collected by centrifugation (4,500 rpm for 30 minutes at 5 °C) and used for sodium measurement in aqueous phase by using ICP mass spectroscopy.

### Results

### Sodium distribution

Table 5 shows that the sodium increase in the "aqueous phase" was apparent when sodium chloride is added after gel formation of starch by cooking and cooling in excess water. The sodium level in the "aqueous phase" of the cooked mixture in which the sodium chloride was added after cooking was higher (0.261 g sodium /100 g water) than that in the "aqueous phase" of the mixture formed by cooking the starch and the sodium together (0.217 g sodium /100 g water). A further increase of the sodium level in the "aqueous phase" was observed in test samples to which potassium chloride was added before cooking. The presence of potassium chloride resulted in the increase of sodium level in aqueous phase to 123% (0.266 g sodium /100 g water) and 127% (0.275 g sodium/100 g water), respectively, compared to the control sample. All samples registered significantly lower sodium level than the expected sodium level of 0.393 g/100 g water, which is calculated based on sodium, comprising 39.34% of sodium chloride. This result was attributed to the presence of starch, which may trap sodium in a gel matrix after cooking.

**Table 5. Sodium distribution in aqueous phase of the texture system**

| | NaCl added before cooking | NaCl added after cooking and low-temperature storage for 1 day | | |
|---|---|---|---|---|
| KCl | 0 | 0 | 0.5g | 1.0g |
| Na(g/100g) | 0.217 (100%) | 0.261 (120%) | 0.266 (123%) | 0.275 (127%) |

### Descriptive sensory evaluation by internal panel

In sensory testing (data not shown), sauces prepared by this approach demonstrated an increase in saltiness perception, especially in sauces prepared with a potassium chloride level of 0.75%, w/w (60% based on sodium chloride). Surprisingly, all the panelists did not perceive any metallic taste or bitter note up to the tested maximum potassium chloride level of 0.75% w/w (60% based on sodium chloride). These results were considered to be quite important because the potassium chloride level is three times higher than the typical usage level of potassium chloride in typical sauces. Potassium chloride usage level is self-limiting as metallic and bitter notes are known to occur at high usage levels. The increased sodium level in the aqueous phase along with the sodium gradient formation throughout the gel phase may be related to the masking effects. Panels also found thicker texture in sauces cooked with increased level of potassium chloride combined with sodium addition after cooking. A potential benefit of this thicker texture may be caloric reduction and cost savings from using smaller amounts of texture ingredients.

### Viscograph profile

Table 6 shows that the sauce cooked without sodium salt at the beginning registered low viscosity when potassium chloride was added at a relatively low level (KCl 20% based on NaCl). However, a gradual increase of potassium chloride up to 60% based on NaCl resulted in a thicker sauce texture than the control sample and also was confirmed in observations by a sensory panel. The different levels of potassium chloride used in this model sauce formulation seem to not have significantly changed the temperature required to cook starch (gelatinization temperature) (data not shown).

**Table 6. Texture development of sauce during cooking in Brabender® viscometer**

| Ref. No. | Peak viscosity (RVU) | Final viscosity (RYU) |
|---|---|---|
| Control | | |
| 1 (Control) | 292 | 815 |

| NaCl added at the end | | |
|---|---|---|
| 2 (KCl 20%, NaCl based) | 214 | 608 |
| 3 (KCl 40%, NaCl based) | 353 | 888 |
| 4 (KCl 60%, NaCl based) | 370 | 961 |

### Sensory evaluation

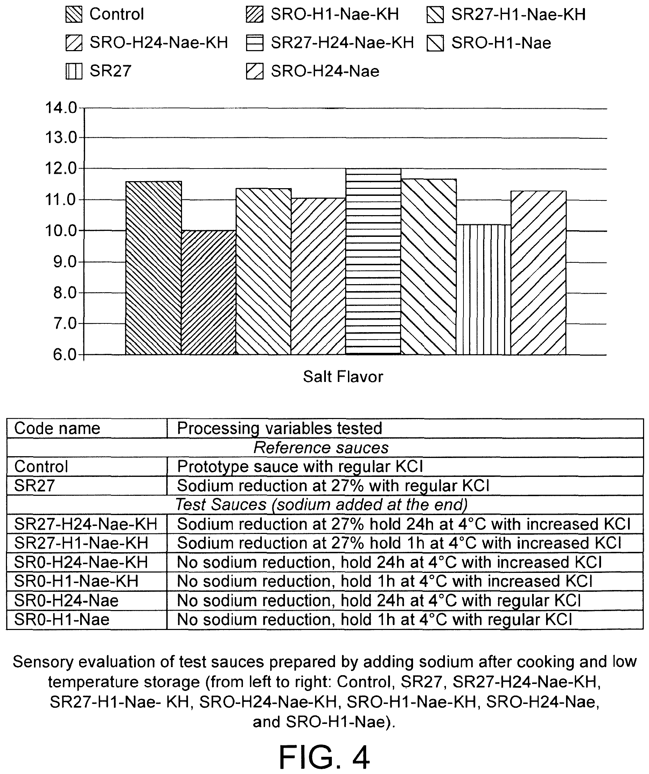

Sensory evaluation was performed by a trained, descriptive panel to provide more accurate evaluation of the sauces prepared by the new process. A summary of sensory evaluation results for the model sauce prepared by the scaled-up process is shown in Fig. 4. Overall, the reduced salt sample with the use of increased level of KCl (four times higher than control) resulted in saltiness close to the control sample when sodium chloride was added after 1 hour storage at 4 °C. Interestingly, the sauce samples cooked with the increased amount of KCl in combination with sodium chloride addition at the end did not provide any off-flavor caused by the elevated KCl level up to 0.88% w/w (120% based on sodium chloride). The ratio of potassium chloride to sodium chloride in those sauces is about six times higher than that normally used in typical sauces. The sensory results show that the typical off-flavor issue of metallic and bitter note contributed by inclusion of a high level of KCl was successfully masked by the new process and also confirmed previous results.

### Thermal and rheological characterization

Test sauces prepared by adding sodium chloride after 1 hour of cold storage resulted in similar thermal transition behaviors to that of the control sauce in having no amylose-lipid complex peak. DSC data shows the formation of amylose-lipid complex in all sauces after cold storage for 1 day (Table 7). In RVA viscosity profiles, adding a reduced amount of sodium chloride or adding sodium chloride at the end resulted in negative impacts on the development of final viscosity (Table 8). Adding KCl before cooking resulted in the increase of final viscosity and seems helpful for the development of sauce texture. It is apparent that salts play important role in the texture development of sauce during cooking.

With those findings, it was speculated that comparable or improved sauce texture versus the control could be obtained by controlled addition of KCl before cooking, when sodium chloride is added at the end of the process. The duration of time in which the sauce was held at low temperature also contributed to the decrease of final viscosity. The viscosity profile of the sauce agrees well with the oral perception evaluated by the sensory panel.

**Table 7. Thermal analysis by DSC on sauce samples cooked with potassium chloride. In test samples, sodium chloride was added to the cooked sauce after storage at low temperature (4°C).**

| Sample Description | Freezing T (°C) | Amylose-lipid complex peak | | | |
|---|---|---|---|---|---|
| | | To (°C) | Tp(°C) | Tc (°C) | H (J/g) |
| Reference | | | | | |
| Control | -14.93 | N/A | | | |
| Negative Control | -12.71 | 92.78 | 97.95 | 103.23 | 0.0468 |
| Sauces for sodium redistribution (NaCl added at the end) | | | | | |
| KCl at current level (17%, based on NaCl) | | | | | |
| Cold storage 1h | -12.16 | N/A | | | |
| Cold storage 24h | -11.82 | 91.22 | 100.65 | 110.50 | 0.0532 |
| KCl at increased level (70%, based on NaCl) | | | | | |
| Cold storage 1 h | -11.72 | N/A | | | |
| Cold storage 24 h | -14.83 | 89.01 | 100.32 | 150.24 | 0.0596 |
| KCl at increased level with sodium reduction (120%, based on NaCl) | | | | | |
| Cold storage 1h | -13.26 | N/A | | | |
| Cold storage 24h | -12.44 | 94.80 | 99.80 | 102.78 | 0.0207 |

**Table 8. Viscosity profile of sauce cooked with potassium chloride. In test samples, sodium chloride was added to cooked sauce after storage at low temperature (4°C).**

| Sample description | Peak viscosity (RVU) | Final viscosity (RVU) |
|---|---|---|
| Reference | | |
| Control | 903 | 685 |
| Negative Control | 836 | 671 |
| Sauces for sodium redistribution (NaCl added at the end) | | |
| KCl at current level | | |
| Cold storage 1h | 722 | 563 |
| Cold storage 24h | 666 | 497 |
| KCl at increased level | | |
| Cold storage 1h | 876 | 614 |
| Cold storage 24h | 767 | 505 |
| KCl at increased level with sodium reduction | | |
| Cold storage 1h | 898 | 680 |
| Cold storage 24h | 648 | 465 |

### Sodium in "aqueous phase" of sauce

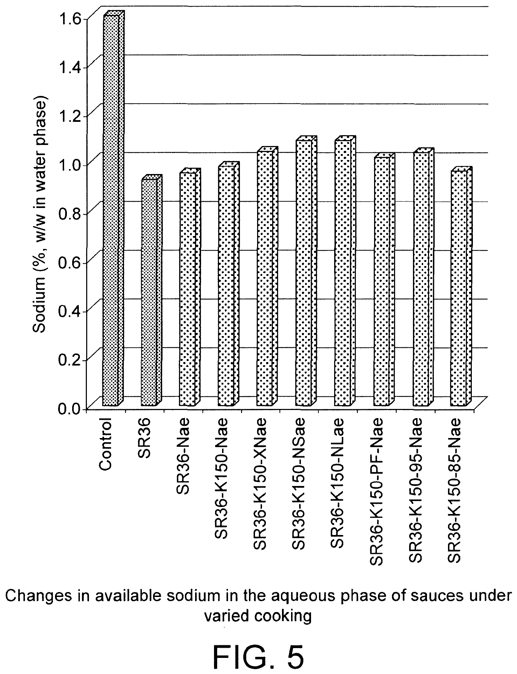

Preliminary measurements of the sodium level in the "aqueous phase" of the sauces were conducted using NMR, conductivity meter, and ICP spectroscopy. The most reliable and reproducible data was obtained by ICP spectrometry. All sauce samples prepared by adding sodium chloride after cooking resulted in the increase of available sodium in "aqueous phase" of sauce (Fig. 5). Cooking with potassium chloride (150%, based on sodium chloride) resulted in significant increase of sodium in "aqueous phase." Replacement of the starch with pastry flour seems to affect the sodium level in the aqueous phase of the sauce. The cooking temperature increase was also shown to be effective to improve the level of available sodium. When a sauce was cooked at 95°C, the available sodium level in aqueous phase was higher than the sodium level in the same phase of sauce cooked at 90°C or 85°C. Xanthan, sugar and lactic acid were also effective in increasing the available sodium level when added with sodium chloride at the end of the processing.

### Texture profile

The peak and final viscosity profiles of the test sauce during cooking in a Brabender® viscometer are summarized in Table 9. It is clear that if the amount of sodium chloride is not high enough (SR36) or sodium chloride is not available (SR36-Nae) during sauce cooking, these conditions cause the decrease of final viscosity of sauce and eventual deterioration of the texture perception of sauce by consumers. Potassium chloride seems to be an important texture builder for sauce in the reduced salt formulation. The final viscosity of the sauce with KCl present during cooking (SR36-K150-Nae) was close to the final viscosity of the control sample. In the samples where sugar and lactic acid were added with sodium chloride after cooking (SR36-K150-NSae and SR36-K150-NLae), sauces with higher final viscosities than control were obtained. Adding xanthan with sodium chloride after cooking (SR36-K150-NXae) decreased the final viscosity of the sauce and suggests that xanthan participated in thermally-induced texture development during sauce cooking, rather than acting as a mere filler in the cooked sauce. When starch was replaced by pastry flour (SR36-K150-PF-Nae), the final viscosity of the sauce was lowered and confirmed previous findings (data not shown).

**Table 9. Texture evaluation using Brabender® viscometer on sauces prepared by varied cooking variables.**

| Sample description | Peak viscosity (BU) | Final viscosity (BU) |
|---|---|---|
| Control | 516 | 735 |
| SR36 | 467 | 678 |
| SR36-Nae | 439 | 628 |
| SR36-K150-Nae | 549 | 649 |
| SR36-K150-NXae | 334 | 512 |
| SR36-K150-NSae | 699 | 764 |
| SR36-K150-NLae | 598 | 782 |
| SR36-K150-PF-Nae | 106 | 163 |
| SR36-K150-95-Nae | 462 | 665 |
| SR36-K150-85-Nae | 441 | 645 |

### Sensory evaluation

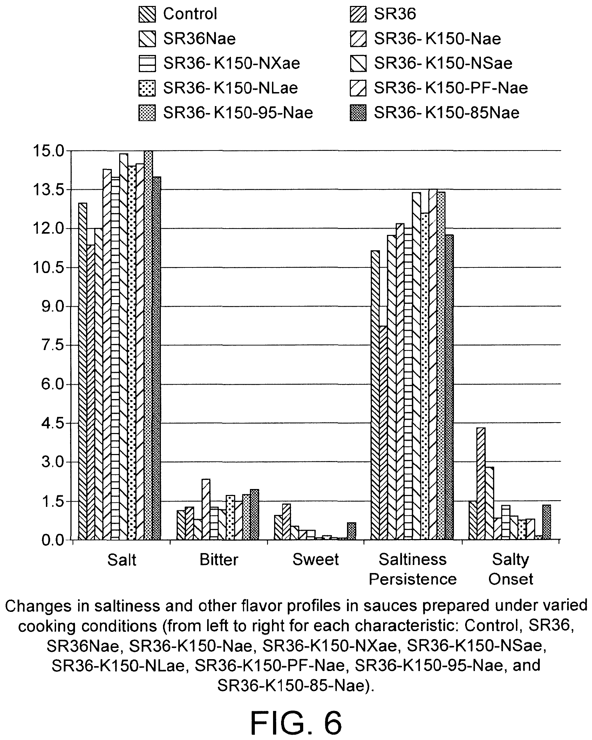

Sensory evaluation was performed by a trained, descriptive panel and related to the available sodium level measured by ICP spectroscopy. All the sauces prepared with sodium chloride addition at the end of the sauce process were perceived with higher saltiness and longer duration of saltiness after intake. For those test sauces, saltiness was perceived faster and time to perceive saltiness was shorter than the negative control (Fig. 6). Interestingly, all sauce samples prepared by cooking with potassium chloride and adding sodium chloride at the end were perceived as saltier than control, even though control sauce recorded highest free sodium level measured by ICP. The free sodium level measured by ICP employed in this research may indicate only part of the saltiness increase resulted by the new process. More research is required to explain the impact of cooking with potassium and adding sodium at the end of the process.

### Summary

The results of the experiments set forth above indicate that inhomogeneous sodium distribution is an effective way to enhance saltiness in products, like sauces, which are mainly composed of gel-forming texture ingredients and water. In the new approach of increasing available sodium in the aqueous phase of sauce, test sauces with a sodium reduction up to 36% were perceived to provide similar or higher level of saltiness than that of sauces without sodium reduction. The level of available sodium in the sauce is affected by sauce cooking variables, such as the sequence of adding sodium chloride, xanthan gum, acid, and sugar. The level of starch relative to pastry flour, the cooking temperatures, and the holding time at cold temperature after cooking also play important roles in the increase of available sodium in the test sauces.

It should be understood that various changes and modifications to the presently preferred embodiments described herein will be apparent to those skilled in the art. Such changes and modifications can be made without departing from the scope of the present subject matter and without diminishing its intended advantages. It is therefore intended that such changes and modifications be covered by the appended claims.

## Claims

1. A method of producing a food composition, the method comprising the steps of:
cooking starch with water to form a gelatinized starch;
adding positively charged non-sodium metal ions at a time selected from the group consisting of before the cooking, during the cooking, and a combination thereof;
cooling the gelatinized starch to a temperature from 4 to 50°C to form an insoluble starch gel; and
adding 0.30 wt% to 3.50 wt% of sodium chloride to the insoluble starch gel to form the food composition.

2. The method according to claim 1, wherein the starch with water is cooked at a temperature from 80 to 120°C for a time period from 10 to 20 minutes.

3. The method according to claim 1, wherein the positively charged non-sodium metal ions are potassium ions.

4. The method according to claim 1, wherein the gelatinized starch comprises 0.25 wt% to 3.2 wt% of potassium chloride.

5. The method according to one of the claims 1 to 4, wherein the food composition is selected from the group consisting of a water-based sauce, a dairy-based sauce, a tomato-based sauce, and combinations thereof.

6. The method according to one of the claims 1 to 5, positioned in a container.

7. The method according to claim 6, wherein the container is a microwaveable tray.

8. The method according to one of the claims 1 to 7, wherein the food composition is chilled or frozen.

## Patentansprüche

1. Verfahren zum Herstellen einer Nahrungsmittelzusammensetzung, wobei das Verfahren die folgenden Schritte umfasst:
Kochen von Stärke mit Wasser, um eine gelierte Stärke zu bilden;
Zusetzen positiv geladener Nicht-Natrium-Metallionen zu einem Zeitpunkt ausgewählt aus der Gruppe bestehend aus vor dem Kochen, während des Kochens und einer Kombination davon;
Kühlen der gelierten Stärke auf eine Temperatur von 4 bis 50 °C, um ein unlösliches Stärkegel zu bilden; und
Zusetzen von 0,30 Gew.-% bis 3,50 Gew.-% an Natriumchlorid zu dem unlöslichen Stärkegel, um die Nahrungszusammensetzung zu bilden.

2. Verfahren nach Anspruch 1, wobei die Stärke mit Wasser für eine Dauer von 10 bis 20 Minuten bei einer Temperatur von 80 bis 120 °C gekocht wird.

3. Verfahren nach Anspruch 1, wobei die positiv geladenen Nicht-Natrium-Metallionen Kaliumionen sind.

4. Verfahren nach Anspruch 1, wobei die gelierte Stärke 0,25 Gew.-% bis 3,2 Gew.-% Kaliumchlorid umfasst.

5. Verfahren nach einem der Ansprüche 1 bis 4, wobei die Nahrungszusammensetzung ausgewählt ist aus der Gruppe bestehend aus einer wasserbasierten Soße, einer milchproduktbasierten Soße, einer tomatenbasierten Soße und Kombinationen davon.

6. Verfahren nach einem der Ansprüche 1 bis 5, angeordnet in einem Behälter.

7. Verfahren nach Anspruch 6, wobei der Behälter eine mikrowellenfähige Schale ist.

8. Verfahren nach einem der Ansprüche 1 bis 7, wobei die Nahrungszusammensetzung gekühlt oder gefroren wird.

## Revendications

1. Procédé de production d'une composition alimentaire, le procédé comprenant les étapes consistant à :
faire cuire de l'amidon avec de l'eau pour former un amidon gélatinisé ;
ajouter des ions métalliques non sodiques positivement chargés à un moment choisi dans le groupe composé d'avant la cuisson, d'au cours de la cuisson et d'une combinaison de ceux-ci ;
refroidir l'amidon gélatinisé à une température de 4 à 50 °C pour former un gel d'amidon insoluble ; et
ajouter 0,30 à 3,50 % en poids de chlorure de sodium au gel d'amidon insoluble pour former la composition alimentaire.

2. Procédé selon la revendication 1, dans lequel l'amidon avec l'eau est cuit à une température de 80 à 120 °C pour une période de temps de 10 à 20 minutes.

3. Procédé selon la revendication 1, dans lequel les ions métalliques non sodiques positivement chargés sont des ions de potassium.

4. Procédé selon la revendication 1, dans lequel l'amidon gélatinisé comprend de 0,25 à 3,2 % en poids de chlorure de potassium.

5. Procédé selon l'une des revendications 1 à 4, dans lequel la composition alimentaire est choisie dans le groupe composé d'une sauce à base d'eau, d'une sauce à base de produit laitier, d'une sauce à base de tomate et de combinaisons de celles-ci.

6. Procédé selon l'une des revendications 1 à 5, positionné dans un récipient.

7. Procédé selon la revendication 6, dans lequel le récipient est un plateau utilisable au four à micro-ondes.

8. Procédé selon l'une des revendications 1 à 7, dans lequel la composition alimentaire est glacée ou congelée.
